# EUROPÄISCHE PATENTANMELDUNG

(11) **EP 3 492 820 A1**
(43) Veröffentlichungstag der Anmeldung: **05.06.2019**
(21) Anmeldenummer: 18207047.4
(22) Anmeldetag: 19.11.2018
(51) Int. Cl.: F24C 15/20, F24C 7/08, A21B 7/00

(54) **VERFAHREN ZUR BEEINFLUSSUNG EINES GARPROZESSES**

(30) Priorität: 04.12.2017 DE 102017128743
(71) Anmelder: Miele & Cie. KG, 33332 Gütersloh (DE)
(72) Erfinder: Ennen, Volker, 32130 Enger (DE); Homburg, Stefan, 32257 Bünde (DE); Popp, Rudolf, 32429 Minden (DE); Schulz, Simone, 33613 Bielefeld (DE); Rohdenburg, Christoph, 49086 Osnabrück (DE)

(57) **Zusammenfassung**

Die Erfindung betrifft ein Verfahren zur Beeinflussung eines Garprozesses, vorzugsweise eines Backprozesses, bei einem Küchengerät (1), vorzugsweise bei einem kombinierten Dampfgarer (1) und bzw. oder bei einem Backofen (1), wobei das Küchengerät (1) aufweist:
• einen Garraum (11), in welchem ein Gargut (2) gegart, vorzugsweise gebacken, werden kann,
• wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann, und
• wenigstens eine Gasaustauschvorrichtung (13), welche ausgebildet ist, die Gasaustauschöffnung (12) durch Öffnungsvorgänge mit einer vorbestimmten konstanten Zeitdauer aktiv zu öffnen und/oder zu schließen,
wobei das Verfahren wenigstens die folgenden Schritte aufweist:
• Erfassen (100d) der Anzahl von Öffnungsvorgängen der Gasaustauschvorrichtung (13) innerhalb eines vorbestimmten Zeitintervalls,
• Erstellen (200d) eines zeitlichen Verlaufs der Anzahl von Öffnungsvorgängen der Gasaustauschvorrichtung (13) pro vorbestimmtem Zeitintervall,
• Erstellen (250d) eines stetigen zeitlichen Verlaufs aus dem erstellten zeitlichen Verlauf der Anzahl von Öffnungsvorgängen der Gasaustauschvorrichtung (13) pro vorbestimmtem Zeitintervall,
• Überprüfen (400d) des erstellten stetigen zeitlichen Verlaufs der Anzahl von Öffnungsvorgängen der Gasaustauschvorrichtung (13) pro vorbestimmtem Zeitintervall auf das Auftreten eines Maximums, und
• bei Auftreten eines Maximums, Beeinflussen (800) des Garprozesses.

## Beschreibung

Die Erfindung betrifft ein Verfahren zur Beeinflussung eines Garprozesses gemäß einem der Patentansprüche 1 bis 4 sowie ein Küchengerät zur Umsetzung eines derartigen Verfahrens gemäß des Patentanspruchs 17.

Es ist üblich und weit verbreitet, in der häuslichen Küche auch Brote, Kuchen, Kekse und dergleichen durch Backen zuzubereiten. Dies kann nicht nur im Backofen sondern auch in einem Dampfgarer erfolgen. Die zu backenden Brote, Kuchen, Kekse und dergleichen können sich dabei nicht nur durch die Art des Teigs und ggfs. durch einen Belag wie z.B. Obst bzw. eine Glasur und dergleichen unterscheiden. Auch können unterschiedliche Backformen oder ein Backblech für verschiedene Brot- und Kuchensorten verwendet werden. Ferner können z.B. für die Zubereitung von Muffins und dergleichen Papierförmchen verwendet werden. Hierdurch wird ein großer Gestaltungsspielraum für den Benutzer bei der Zubereitung von Broten, Kuchen, Keksen und dergleichen geschaffen, was zu entsprechend vielfältigen Produkten führen kann.

Um die Zubereitung von Brot für den Benutzer zu vereinfachen, ist z.B. aus der EP 1 481 588 B1 eine Brotbackmaschine und ein Steuerungsverfahren hierzu bekannt. Die Zutaten zum Brotbacken können in einem Backofenraum der Brotbackmaschine aufgenommen werden. Die Brotbackmaschine kann eine Vielzahl von Brotbackprozessen bei jeweiligen Verarbeitungstemperaturen während vorgegebener Verarbeitungszeiten ausführen.

Aus der EP 0 295 723 B1 ist eine automatische Brotbackmaschine für den häuslichen Gebrauch bekannt, welche den Teig kneten, fermentieren und backen kann. Die Fertigstellungszeit, zu der das Brot fertig sein soll, kann vom Benutzer eingestellt werden. Ferner kann der Benutzer die Art und bzw. oder Menge des zu backenden Brots einstellen. Hierauf basierend kann die Brotbackmaschine nach Maßgabe der voreingestellten Fertigstellungszeit rückrechnen, wann das Kneten des Teigs zu beginnen hat, damit der Brotbackprozess zu der voreingestellten Fertigstellungszeit abgeschlossen ist.

Bekannt ist es somit aus dem Stand der Technik, dass die Zeitdauer des Backprozesses bei der Zubereitung von z.B. Brot fest vorgegeben wird. Nachteilig ist hierbei jedoch, dass es zu Fehleingaben des Benutzers kommen kann, welche zu zu langen oder zu zu kurzen Backzeiten führen können. Ferner erfordern auch unterschiedliche Brot-, Kuchen-, Keks- und sonstige Teige unterschiedliche Backzeiten, welche zu beachten sind. Diese können weiter dadurch variieren, dass unterschiedliche Backformen, ein Backblech, Papierförmchen, Beläge, Glasuren etc. verwendet werden. Ferner kann das Ergebnis einer Teigzubereitung bei jeder Zubereitung schwanken; insbesondere können vom Benutzer Flüssigkeitsmengen mit einer schwankenden Messgenauigkeit abgemessen und verwendet werden, so dass insbesondere der Feuchtigkeitsgrad eines Teigs signifikant variieren kann.

All diese Rahmenbedingungen können sich einzeln und insbesondere in ihrer Kombination auf die Zeitdauer auswirken, welche der jeweilige Teig zum Backen benötigt, um ein genießbares Ergebnis und insbesondere um ein optimales Ergebnis des Backens zu erreichen. Daher kann eine stets gleich vorgegebene Backzeitdauer nicht sicher zu einem genießbaren Ergebnis und schon gar nicht zu einem optimalen Ergebnis des Backens führen.

Um einen Backprozess durch den Backofen automatisch zu beenden, wenn ein genießbares oder sogar optimales Ergebnis erreicht ist, ist es für Backöfen bekannt, mittels eines Sensors den Sauerstoffgehalt der Abluft des Backofenraums zu erfassen. Aus dem gemessenen Sauerstoffgehalt kann indirekt auf die Feuchtigkeit der Abluft des Backofenraums geschlossen werden, über welche sich auf den Garzustand des Garguts rückschließen lässt.

Diesem Verfahren liegt die Erkenntnis zugrunde, dass die Feuchte im Garraum im Laufe eines Backvorgangs einen charakteristischen Verlauf aufweist. Durch die Erwärmung des Backofenraums gibt das Gargut wie z.B. ein Teig Feuchtigkeit an den Backofenraum ab. Dadurch steigt der Feuchtegehalt der Luft im Backofenraum an. Dem wirkt die Verdünnung der erwärmten, feuchten Luft im Backofenraum durch frische Luft von außen entgegen, welche z.B. über eine Klappe gesteuert zugeführt wird; dies wird allgemein als Garraumdurchspülung bezeichnet. Wenn das Gargut wie z.B. ein Brot, ein Kuchen, Kekse oder dergleichen gar ist, gibt das Gargut weniger Feuchtigkeit ab und der Feuchtegehalt der Luft kann bei ausreichender Durchspülung wieder sinken. Dieser Verlauf der Feuchtigkeit im Backofenraum kann für eine Backendeerkennung genutzt werden, d.h. zur Erkennung des Zeitpunkts, wenn das Gargut aufgrund der gemessenen gesunkenen Feuchtigkeit im Backofenraum genießbar und insbesondere optimal gegart bzw. gebacken sein sollte.

Statt reinen Backöfen können jedoch auch kombinierte Dampfgarer zum Backen verwendet werden, welche neben der eigentlichen Dampfgarfunktion auch eine Backfunktion aufweisen, welche wie bei einem reinen Backofen ohne zusätzliche Feuchtezufuhr über den Dampferzeuger betrieben werden kann. Da sich der Aufbau eines Dampfgarer mit Backofenfunktion prinzipbedingt an einigen Stellen von einem Backofen unterscheidet, werden teilweise auch bei klassischen Backofenbetriebsarten andere Regelverfahren eingesetzt. Daher müssen auch bei einer Backendeerkennung daran angepasste Techniken genutzt werden.

Nachteilig ist bei der Messung des Sauerstoffgehalts des Garraums eines Backofens ferner, dass die hierzu verwendeten Sauerstoffsensoren nur eine begrenzte Lebensdauer aufweisen, da sie für diesen Einsatz bisher nicht robust genug sind. Somit kann zwar die indirekte Erfassung der Feuchtigkeit des Backoffenraums über Sauerstoffsensoren erfolgen, jedoch kann diese Funktion im Laufe des Betriebs des Backofens ausfallen, was der Benutzer der Qualität des Backofens anlasten kann.

Der Erfindung stellt sich somit das Problem, ein Verfahren zu schaffen, so dass ein Garprozess, vorzugsweise ein Backprozess, bei einem Küchengerät, vorzugsweise bei einem kombinierten Dampfgarer und bzw. oder einem Backofen, beeinflusst werden kann. Vorzugsweise soll ein Zustand, vorzugsweise das Ende, eines Garprozesses, vorzugsweise eines Backprozesses, bei einem Küchengerät, vorzugsweise bei einem kombinierten Dampfgarer und bzw. oder einem Backofen, automatisch einfach und bzw. oder sicher erkannt werden. Dies soll insbesondere für ein Küchengerät mit einer geregelten Feuchtigkeit des Garraums ermöglicht werden. Zumindest soll eine Alternative zu bekannten derartigen Verfahren geschaffen werden.

Erfindungsgemäß wird dieses Problem durch ein Verfahren mit den Merkmalen der Patentansprüche 1 bis 4 sowie durch ein Küchengerät mit den Merkmalen des Patentanspruchs 17 gelöst. Vorteilhafte Ausgestaltungen und Weiterbildungen der Erfindung ergeben sich aus den nachfolgenden Unteransprüchen.

Somit betrifft die vorliegende Erfindung ein Verfahren zur Beeinflussung eines Garprozesses, vorzugsweise eines Backprozesses, bei einem Küchengerät, vorzugsweise bei einem kombinierten Dampfgarer und bzw. oder bei einem Backofen, wobei das Küchengerät aufweist:
- einen Garraum, in welchem ein Gargut gegart, vorzugsweise gebacken, werden kann,
- wenigstens eine Gasaustauschöffnung, durch welche hindurch Gas zwischen dem Garraum und der Umgebung des Garraums, vorzugsweise der Umgebung des Küchengeräts, ausgetauscht werden kann, und
- wenigstens eine Gasaustauschvorrichtung, welche ausgebildet ist, die Gasaustauschöffnung durch Öffnungsvorgänge aktiv zu öffnen und/oder zu schließen,
wobei das Verfahren wenigstens die folgenden Schritte aufweist:
- Erfassen der Zeitdauer der Öffnungsvorgänge der Gasaustauschvorrichtung,
- Vergleichen der erfassten Zeitdauer der Öffnungsvorgänge der Gasaustauschvorrichtung mit einer vorbestimmten Zeitdauer, und
- bei Erreichen der vorbestimmten Zeitdauer, Beeinflussen des Garprozesses.

Der vorliegenden Erfindung liegt dabei die Erkenntnis zugrunde, dass das Maß der Feuchtigkeit, welche während des Garprozesses von dem Gargut in den Garraum abgegeben wird und somit ein Indikator für dessen Gargrad ist, nicht nur direkt über die Feuchtigkeit im Garraum oder indirekt über den Sauerstoffgehalt des Garraums ermittelt werden kann. Darüber hinaus kann auch aus dem Maß des ausgetauschten Gases des Garraums auf die vom Gargut abgegebene Feuchtigkeit geschlossen werden, weil die eingangs beschriebene Garraumdurchspülung in Abhängigkeit der Feuchtigkeit im Garraum erfolgt. Unter Gas ist hierbei insbesondere das Gas zu verstehen, welches in dem Garraum und in der Umgebung vorhanden sein und zwischen diesen ausgetauscht werden kann. Dieses Gas ist vorzugsweise Luft mit einem Anteil von bis zu 100% Dampf.

Somit kann das Maß der Garraumdurchspülung z.B. über die Aktivität einer Gasaustauschvorrichtung, welche die Gasaustauschöffnung aktiv öffnen und bzw. oder schließen kann, erfasst werden. Die Gasaustauschvorrichtung kann vorzugsweise eine Klappe sein, wobei auch ein Schieber, eine Irisblende oder andere Elemente zur Variation des Querschnitts der Gasaustauschöffnung einsetzt werden können. Das Öffnen und Schließen der Gasaustauschöffnung kann vorzugsweise digital zwischen den Zuständen "vollständig geöffnet" und "vollständig geschlossen" erfolgen, wobei auch eine Zwischenstufe oder mehrere Zwischenstufen sowie eine stufenlose Verstellung verwendet werden können. Bei mehr als zwei möglichen Querschnitten könnte eine entsprechende Durchflussmenge berücksichtigt werden. Vorzugsweise kann bei der Betrachtung der Durchflussmenge durch die Gasaustauschöffnung auch der Gasstrom bzw. der Luftstrom eines einstellbaren Lüfters berücksichtigt werden, welcher in Stufen oder stufenlos einstellbar sein kann.

In Abhängigkeit des Maßes der Garraumdurchspühlung bzw. in Abhängigkeit der Aktivität der Gasaustauschvorrichtung kann dann auf den Gargrad des Garguts geschlossen und der Garprozess beeinflusst werden. Mehrere Verfahren, welche diese Erkenntnis unterschiedlich anwenden, werden im Folgenden beschrieben.

Vorteilhaft ist hierbei, dass diese Verfahren auch bei kombinierten Dampfgarern eingesetzt werden können, bei denen funktionsbedingt die konstant geregelte Feuchtigkeit des Garraums nicht zur Erfassung der vom Gargut abgegebenen Feuchtigkeit verwendet werden.

Vorteilhaft ist hierbei auch, dass mittels dieser Verfahren auf Sauerstoffsensoren im Garraum verzichtet werden kann, um über den Sauerstoffgehalt auf die Feuchtigkeit im Garraum rückzuschließen. Dies kann die Kosten derartiger Sensoren vermeiden.

Vorteilhaft ist weiterhin, dass diese Verfahren sowohl bei Dampfgarern als auch bei Backöfen eingesetzt werden können.

Vorteilhaft ist ferner, dass die Anwendung dieser Verfahren auf Küchengeräte, welche bereits mit einer geregelten Garraumdurchspülung betrieben werden, einfach und ohne konstruktiven Mehraufwand angewendet werden können. Dies ermöglicht die Nutzung der Vorteile dieser Verfahren bei geringem Aufwand zur Umsetzung.

Dabei wird diese Erkenntnis bei dem vorliegenden Verfahren derart umgesetzt, dass davon ausgegangen wird, dass die Gasaustauschöffnung stets dann automatisch geöffnet wird, wenn eine vorbestimmte Feuchtigkeit im Garraum vorhanden ist und erkannt wurde. Ferner wird davon ausgegangen, dass in diesem Fall die Dauer der Gasaustauschöffnung stets automatisch so lange erfolgt, dass ein Gasstrom bzw. der Luftstrom mit einer als konstant anzunehmenden Feuchtigkeit aus dem Garraum abgegeben wird. Somit kann geschlussfolgert werden, dass wenn man die Zeitdauer der Öffnungsvorgänge der Gasaustauschvorrichtung während des Garprozesses erfasst und betrachtet, nach einer vorbestimmten erfassten Zeitdauer der Öffnungsvorgänge der Gasaustauschvorrichtung auch eine hierzu proportionale vorbestimmte Feuchtigkeitsmenge mit dem ausgetauschten Gas bzw. mit der ausgetauschten Luft aus dem Garraum abgeführt wurde, welche vom Gargut an den Garraum abgegeben wurde.

Somit kann erfindungsgemäß über die Zeitdauer der Öffnungsvorgänge der Gasaustauschvorrichtung während des Garprozesses der Gargrad des Garguts erkannt werden. Diese Kenntnis kann dazu verwendet werden, den Garprozess zu beeinflussen, wie weiter unten noch beschrieben werden wird.

Die vorliegende Erfindung betrifft auch ein Verfahren zur Beeinflussung eines Garprozesses, vorzugsweise eines Backprozesses, bei einem Küchengerät, vorzugsweise bei einem kombinierten Dampfgarer und bzw. oder bei einem Backofen, wobei das Küchengerät aufweist:
- einen Garraum, in welchem ein Gargut gegart, vorzugsweise gebacken, werden kann,
- wenigstens eine Gasaustauschöffnung, durch welche hindurch Gas zwischen dem Garraum und der Umgebung des Garraums, vorzugsweise der Umgebung des Küchengeräts, ausgetauscht werden kann, und
- wenigstens eine Gasaustauschvorrichtung, welche ausgebildet ist, die Gasaustauschöffnung durch Öffnungsvorgänge mit einer vorbestimmten konstanten Zeitdauer aktiv zu öffnen und/oder zu schließen,
wobei das Verfahren wenigstens die folgenden Schritte aufweist:
- Erfassen der Anzahl von Öffnungsvorgängen der Gasaustauschvorrichtung,
- Vergleichen der erfassten Anzahl von Öffnungsvorgängen der Gasaustauschvorrichtung mit einer vorbestimmten Anzahl, und
- bei Erreichen der vorbestimmten Anzahl, Beeinflussen des Garprozesses.

Dieses Verfahren nutzt die erfindungsgemäße Erkenntnis dahingehend, dass davon ausgegangen wird, dass aufgrund der vorbestimmten konstanten Zeitdauer, welche jeder Öffnungsvorgang der Gasaustauschvorrichtung aufweist, mit jedem Öffnungsvorgang auch eine vorbestimmte konstante Menge von Feuchtigkeit aus dem Garraum nach außen abgegeben wird. Wird in diesem Fall die Anzahl der zeitlich konstanten Öffnungsvorgänge der Gasaustauschvorrichtung betrachtet, kann hierüber analog dem zuerst beschriebenen Verfahren auf den Gargrad des Garguts geschlossen werden.

Die vorliegende Erfindung betrifft auch ein Verfahren zur Beeinflussung eines Garprozesses, vorzugsweise eines Backprozesses, bei einem Küchengerät, vorzugsweise bei einem kombinierten Dampfgarer und bzw. oder bei einem Backofen, wobei das Küchengerät aufweist:
- einen Garraum, in welchem ein Gargut gegart, vorzugsweise gebacken, werden kann,
- wenigstens eine Gasaustauschöffnung, durch welche hindurch Gas zwischen dem Garraum und der Umgebung des Garraums, vorzugsweise der Umgebung des Küchengeräts, ausgetauscht werden kann, und
- wenigstens eine Gasaustauschvorrichtung, welche ausgebildet ist, die Gasaustauschöffnung durch Öffnungsvorgänge mit einer vorbestimmten konstanten Zeitdauer aktiv zu öffnen und/oder zu schließen,
wobei das Verfahren wenigstens die folgenden Schritte aufweist:
- Erfassen der Anzahl von Öffnungsvorgängen der Gasaustauschvorrichtung,
- Bestimmen der Zeitdauer der Öffnungsvorgänge der Gasaustauschvorrichtung durch Multiplizieren der erfassten Anzahl von Öffnungsvorgängen der Gasaustauschvorrichtung mit der vorbestimmten konstanten Zeitdauer eines Öffnungsvorgangs,
- Vergleichen der bestimmten Zeitdauer der Öffnungsvorgänge der Gasaustauschvorrichtung mit einer vorbestimmten Zeitdauer, und
- bei Erreichen der vorbestimmten Zeitdauer, Beeinflussen des Garprozesses.

In diesem Fall werden zunächst die zeitlich konstanten Öffnungsvorgänge erfasst und durch Multiplikation mit ihrer Zeitdauer in die Zeitdauer umgerechnet, über welche die Gasaustauschvorrichtung der Gasaustauschöffnung geöffnet ist. Dann kann über die hierzu proportional angenommene und aus dem Garraum abgegebene Feuchtigkeitsmenge auf den Gargrad des Garguts geschlossen werden, wie zuvor beschrieben.

Die vorliegende Erfindung betrifft auch ein Verfahren zur Beeinflussung eines Garprozesses, vorzugsweise eines Backprozesses, bei einem Küchengerät, vorzugsweise bei einem kombinierten Dampfgarer und bzw. oder bei einem Backofen, wobei das Küchengerät aufweist:
- einen Garraum, in welchem ein Gargut gegart, vorzugsweise gebacken, werden kann,
- wenigstens eine Gasaustauschöffnung, durch welche hindurch Gas zwischen dem Garraum und der Umgebung des Garraums, vorzugsweise der Umgebung des Küchengeräts, ausgetauscht werden kann, und
- wenigstens eine Gasaustauschvorrichtung, welche ausgebildet ist, die Gasaustauschöffnung durch Öffnungsvorgänge mit einer vorbestimmten konstanten Zeitdauer aktiv zu öffnen und/oder zu schließen,
wobei das Verfahren wenigstens die folgenden Schritte aufweist:
- Erfassen der Anzahl von Öffnungsvorgängen der Gasaustauschvorrichtung innerhalb eines vorbestimmten Zeitintervalls,
- Erstellen eines zeitlichen Verlaufs der Anzahl von Öffnungsvorgängen der Gasaustauschvorrichtung pro vorbestimmtem Zeitintervall,
- Erstellen eines stetigen zeitlichen Verlaufs aus dem erstellten zeitlichen Verlauf der Anzahl von Öffnungsvorgängen der Gasaustauschvorrichtung pro vorbestimmtem Zeitintervall,
- Überprüfen des erstellten stetigen zeitlichen Verlaufs der Anzahl von Öffnungsvorgängen der Gasaustauschvorrichtung pro vorbestimmtem Zeitintervall auf das Auftreten eines Maximums, und
- bei Auftreten eines Maximums, Beeinflussen des Garprozesses.

Dieses Verfahren nutzt die Eingangs beschriebene Erkenntnis, dass das Maß der Garraumdurchspülung z.B. über die Aktivität einer Gasaustauschvorrichtung zur Erkennung eines Gargrads des Garguts genutzt werden kann, unabhängig von einer zeitlichen Betrachtung. Vielmehr wird davon ausgegangen, dass ein bestimmter Gargrad des Garguts dadurch erkannt werden kann, dass der Zeitpunkt des Garprozesses erkannt wird, wenn die Abgabe von Feuchtigkeit des Garguts an den Garraum im intensivsten ist. Dies kann z.B. dann der Fall sein, wenn das Gargut z.B. als Teig fertig gebacken ist und danach zu trocken bzw. hart werden würde.

Daher wird gemäß dieses Verfahrens ausgewertet, wie intensiv der Garraum durchspült wird. Dies kann über die Anzahl der Öffnungsvorgänge der Gasaustauschvorrichtung pro vorbestimmtem Zeitintervall erfolgen. Da dieser zeitliche Verlauf jedoch eine Anzahl pro Zeitintervall aufweist, wird dieser zeitliche Verlauf in einen stetigen zeitlichen Verlauf gewandelt, welcher zuverlässiger auf ein Maximum überprüft werden kann als die Anzahl von Öffnungsvorgängen der Gasaustauschvorrichtung pro Zeitintervall.

Gemäß einem Aspekt der vorliegenden Erfindung weist das zuvor beschriebene Verfahren ferner wenigstens den vorangehenden Schritt auf:
- Erfassen einer Garguteigenschaft, vorzugsweise einer Teigart, vorzugsweise durch eine Eingabe eines Benutzers,
wobei die Schritte des Erstellens eines stetigen zeitlichen Verlaufs und des Überprüfens des erstellten stetigen zeitlichen Verlaufs wie folgt ausgeführt werden:
- Erstellen eines ersten stetigen zeitlichen Verlaufs aus dem erstellten zeitlichen Verlauf der Anzahl von Öffnungsvorgängen der Gasaustauschvorrichtung pro vorbestimmtem Zeitintervall,
- Überprüfen des ersten erstellten stetigen zeitlichen Verlaufs der Anzahl von Öffnungsvorgängen der Gasaustauschvorrichtung pro vorbestimmtem Zeitintervall auf wenigstens ein vorbestimmtes Kriterium,
- bei Erfüllen wenigstens eines vorbestimmten Kriteriums, Erstellen eines zweiten stetigen zeitlichen Verlaufs aus dem erstellten zeitlichen Verlauf der Anzahl von Öffnungsvorgängen der Gasaustauschvorrichtung pro vorbestimmtem Zeitintervall in Abhängigkeit des erfüllten vorbestimmten Kriteriums,
- Überprüfen des zweiten erstellten stetigen zeitlichen Verlaufs der Anzahl von Öffnungsvorgängen der Gasaustauschvorrichtung pro vorbestimmtem Zeitintervall auf das Auftreten eines Maximums.

Diesem Aspekt der vorliegenden Erfindung liegt die Erkenntnis zugrunde, dass das Auffinden des Maximums in einem stetigen zeitlichen Verlauf der Anzahl von Öffnungsvorgängen der Gasaustauschvorrichtung pro vorbestimmtem Zeitintervall, welches einen bestimmten Gargrad des Garguts repräsentiert, zuverlässiger erfolgen kann, falls eine Garguteigenschaft wie z.B. die Teigart des Garguts wie z.B. "Rührteig" bekannt ist. Als weitere Eigenschaft des Garguts kann dann dessen Form erkannt und bei dem Auffinden des Maximums berücksichtigt werden. Die Form kann z.B. bei einem Teig ein Kastenkuchen, ein Flachkuchen oder kleine Kekse sein.

In diesem Fall kann aus dem zeitlichen Verlauf der Anzahl von Öffnungsvorgängen der Gasaustauschvorrichtung pro vorbestimmtem Zeitintervall, welcher fortlaufend erfasst werden kann, zunächst ein erster stetiger zeitlicher Verlauf erstellt werden, welcher vorzugsweise eine Parametrierung aufweist, so dass ein Maximum erst nach dem bestimmten Gargrad des Garguts auftreten würde. Dieser erste stetige zeitliche Verlauf kann dann hinsichtlich wenigstens eines Kriteriums überprüft werden. Dieses Kriterium, welches im Folgenden näher beschrieben werden wird, kann z.B. eine Aussage über die Form des Garguts ermöglichen, so dass falls ein Kriterium erfüllt ist, ein zweiter stetiger zeitlicher Verlauf erstellt werden kann, dessen Erstellung z.B. die erkannte Form des Garguts berücksichtigt. Da dieser zweite stetige zeitliche Verlauf dann erst hinsichtlich eines Maximums überprüft wird, kann das Auffinden des Maximums in diesem zweiten Verlauf an die Form des Garguts angepasst erfolgen, so dass das Erkennen eines bestimmten Gargrads des Garguts und eine hieraus resultierende Beeinflussung des Garprozesses gezielter als bisher erfolgen kann.

Gemäß einem weiteren Aspekt der vorliegenden Erfindung weist das zuvor beschriebene Verfahren ferner wenigstens den vorangehenden Schritt auf:
- Erfassen einer Garguteigenschaft, vorzugsweise einer Teigart, vorzugsweise durch eine Eingabe eines Benutzers,
wobei die Schritte des Erstellens eines stetigen zeitlichen Verlaufs, des Überprüfens des erstellten stetigen zeitlichen Verlaufs wie folgt ausgeführt werden:
- Erstellen eines ersten stetigen zeitlichen Verlaufs aus dem erstellten zeitlichen Verlauf der Anzahl von Öffnungsvorgängen der Gasaustauschvorrichtung pro vorbestimmtem Zeitintervall,
- Erstellen einer Mehrzahl zweiter stetiger zeitlicher Verläufe aus dem erstellten zeitlichen Verlauf der Anzahl von Öffnungsvorgängen der Gasaustauschvorrichtung pro vorbestimmtem Zeitintervall, welche sich hinsichtlich wenigstens eines Parameters ihres Erstellens unterscheiden,
- Überprüfen des ersten erstellten stetigen zeitlichen Verlaufs der Anzahl von Öffnungsvorgängen der Gasaustauschvorrichtung pro vorbestimmtem Zeitintervall auf wenigstens ein vorbestimmtes Kriterium,
- bei Erfüllen wenigstens eines vorbestimmten Kriteriums, Auswählen eines zweiten erstellten stetigen zeitlichen Verlaufs aus der Mehrzahl zweiter erstellter stetiger zeitlicher Verläufe in Abhängigkeit des erfüllten vorbestimmten Kriteriums,
- Überprüfen des ausgewählten zweiten erstellten stetigen zeitlichen Verlaufs der Anzahl von Öffnungsvorgängen der Gasaustauschvorrichtung pro vorbestimmtem Zeitintervall auf das Auftreten eines Maximums.

Dieser Aspekt setzt den zuvor beschrieben Aspekt derartig variiert um, dass parallel zum ersten stetigen zeitlichen Verlauf, welcher zunächst überprüft wird, eine Mehrzahl von zweiten stetigen zeitlichen Verläufen erzeugt wird. Wird im ersten stetigen zeitlichen Verlauf das Kriterium erfüllt, wird derjenige bereits laufende zweite stetige zeitliche Verlauf weiterverfolgt, welcher dem erfüllten Kriterium entspricht. Die übrigen zweiten stetigen zeitlichen Verläufe können beendet werden.

Gemäß einem weiteren Aspekt der vorliegenden Erfindung weist das zuvor beschriebene Verfahren ferner wenigstens den vorangehenden Schritt auf:
- Erfassen einer Garguteigenschaft, vorzugsweise einer Teigart, vorzugsweise durch eine Eingabe eines Benutzers,
wobei die Schritte des Erstellens eines stetigen zeitlichen Verlaufs, des Überprüfens des erstellten stetigen zeitlichen Verlaufs wie folgt ausgeführt werden:
- Erstellen eines ersten stetigen zeitlichen Verlaufs aus dem erstellten zeitlichen Verlauf der Anzahl von Öffnungsvorgängen der Gasaustauschvorrichtung pro vorbestimmtem Zeitintervall,
- Erstellen einer Mehrzahl zweiter stetiger zeitlicher Verläufe aus dem erstellten zeitlichen Verlauf der Anzahl von Öffnungsvorgängen der Gasaustauschvorrichtung pro vorbestimmtem Zeitintervall, welche sich hinsichtlich wenigstens eines Parameters ihres Erstellens unterscheiden,
- Überprüfen des ersten erstellten stetigen zeitlichen Verlaufs der Anzahl von Öffnungsvorgängen der Gasaustauschvorrichtung pro vorbestimmtem Zeitintervall auf wenigstens ein vorbestimmtes Kriterium,
- bei Nicht-Erfüllen wenigstens eines vorbestimmten Kriteriums, Beenden des zweiten erstellten stetigen zeitlichen Verlaufs aus der Mehrzahl zweiter erstellter stetiger zeitlicher Verläufe, dessen Parameter mit dem nicht-erfüllten Kriterium in einem vorbestimmten Zusammenhang steht,
- Überprüfen der Anzahl der zweiten erstellten stetigen zeitlichen Verläufe der Anzahl von Öffnungsvorgängen der Gasaustauschvorrichtung pro vorbestimmtem Zeitintervall, und
- bei Reduzierung der Anzahl der zweiten erstellten stetigen zeitlichen Verläufe der Anzahl von Öffnungsvorgängen der Gasaustauschvorrichtung pro vorbestimmtem Zeitintervall auf einen verbliebenen zweiten erstellten stetigen zeitlichen Verlauf der Anzahl von Öffnungsvorgängen der Gasaustauschvorrichtung pro vorbestimmtem Zeitintervall, Überprüfen des verbliebenen zweiten erstellten stetigen zeitlichen Verlaufs der Anzahl von Öffnungsvorgängen der Gasaustauschvorrichtung pro vorbestimmtem Zeitintervall auf das Auftreten eines Maximums.

Dieser Aspekt setzt den zuvor beschriebenen Aspekt derartig variiert um, dass nicht alle zweiten stetigen zeitlichen Verläufe solange erstellt werden, bis lediglich einer von ihnen zur Weiterverfolgung durch die Erfüllung des Kriteriums ausgewählt wird. Vielmehr werden die zweiten stetigen zeitlichen Verläufe fortlaufend danach überprüft, ob sie ein Kriterium nicht erfüllen. Ist dies der Fall, so wird dieser zweite stetige zeitliche Verlauf beendet. Auf diese Art und Weise kann der Berechnungsaufwand für das Erstellen der zweiten stetigen zeitlichen Verläufe im Laufe des Verfahrens reduziert werden. Der letzte verbleibende zweite stetige zeitliche Verlauf kann dann wie zuvor beschrieben auf ein Maximum überprüft werden.

Gemäß einem weiteren Aspekt der vorliegenden Erfindung ist das vorbestimmte Kriterium:
- die Amplitude des ersten Maximums des ersten stetigen zeitlichen Verlaufs, und bzw. oder
- die Amplitude des ersten Maximums der zeitlichen Ableitung des ersten stetigen zeitlichen Verlaufs, und bzw. oder
- die Zeitdauer bis zum ersten Anstieg des ersten stetigen zeitlichen Verlaufs, und bzw. oder
- die Zeitdauer bis zum ersten Anstieg der zeitlichen Ableitung des ersten stetigen zeitlichen Verlaufs.

Gemäß einem weiteren Aspekt der vorliegenden Erfindung erfolgt das Erstellen des stetigen zeitlichen Verlaufs durch zeitliche Verzögerung des erstellten zeitlichen Verlaufs der Anzahl von Öffnungsvorgängen der Gasaustauschvorrichtung pro vorbestimmtem Zeitintervall. Auf diese Art und Weise kann ein stetiger zeitlicher Verlauf erstellt werden. Auch kann hierdurch eine erste maximale Anzahl von Öffnungsvorgängen innerhalb eines vorbestimmten Zeitintervalls, welche jedoch nicht dem bestimmten Gargrad des Garguts entspricht, sozusagen geglättet werden, um das gesuchte Maximum als solches zuverlässig erkennen zu können.

Gemäß einem weiteren Aspekt der vorliegenden Erfindung wird die zeitliche Verzögerung mittels einer dynamischen Funktion berechnet, welche auf Differenzialgleichungen basiert. Hierdurch kann ein großer Gestaltungsspielraum bei der Erstellung der zeitlichen Verzögerung geschaffen werden, so dass das Maximum sicher erkannt sowie an den Zeitpunkt des stetigen zeitlichen Verlaufs geschoben werden kann, welcher dem gesuchten bestimmten Gargrad des Garguts entspricht.

Gemäß einem weiteren Aspekt der vorliegenden Erfindung erfolgt das Erstellen des stetigen zeitlichen Verlaufs durch digitale Filterung des erstellten zeitlichen Verlaufs der Anzahl von Öffnungsvorgängen der Gasaustauschvorrichtung pro vorbestimmtem Zeitintervall. Hierdurch kann eine Art der Berechnung einer zeitlichen Verzögerung geschaffen werden, welche sich bei digital arbeitenden Steuerungseinheiten und dergleichen einfach und mit möglichst wenig Rechenleistung umsetzen lässt.

Gemäß einem weiteren Aspekt der vorliegenden Erfindung erfolgt das Erstellen des stetigen zeitlichen Verlaufs durch Anwendung eines Butterworth-Filters, vorzugsweise dritter Ordnung, auf den erstellten zeitlichen Verlauf der Anzahl von Öffnungsvorgängen der Gasaustauschvorrichtung pro vorbestimmtem Zeitintervall. Hierdurch kann eine schnelle Erstellung des stetigen zeitlichen Verlaufs mit möglichst wenig Rechenleistung erfolgen. Die Parametrierung des Butterworth-Filters kann dabei z.B. für seine Grenzfrequenz erfolgen.

Gemäß einem weiteren Aspekt der vorliegenden Erfindung erfolgt das Erstellen des stetigen zeitlichen Verlaufs unter Berücksichtigung der Temperatur des Garprozesses, wobei die Temperatur des Garprozesses vorzugsweise über einen Faktor beim Erstellen des stetigen zeitlichen Verlaufs und bzw. oder über eine temperaturabhängige Parametrierung des Erstellens des stetigen zeitlichen Verlaufs berücksichtigt wird. Hierdurch kann der bestimmte Gargrad des Garguts noch verlässlicher aus dem stetigen zeitlichen Verlauf erkannt werden. Die Temperatur des Garprozesses kann zum einen eine Soll-Temperatur sein, welche vorzugsweise vom Benutzer vorgegeben werden kann, oder zum anderen eine Ist-Temperatur des Garraums, welche vorzugsweise sensorisch erfasst oder rechnerisch bestimmt werden kann.

Gemäß einem weiteren Aspekt der vorliegenden Erfindung erfolgt das Erstellen des stetigen zeitlichen Verlaufs unter Berücksichtigung eines Gargrads des Garguts, welcher vorzugsweise von einem Benutzer durch Eingabe vorgegeben werden kann, wobei der Gargrad des Garguts vorzugsweise über einen Faktor beim Erstellen des stetigen zeitlichen Verlaufs und bzw. oder über eine gargradabhängige Parametrierung des Erstellens des stetigen zeitlichen Verlaufs berücksichtigt wird.

Gemäß einem weiteren Aspekt der vorliegenden Erfindung wird das Beeinflussen des Garprozesses als ein Beenden des Garprozesses ausgeführt. Auf diese Art und Weise kann ein Gargut wie z.B. ein Brot, Kuchen oder dergleichen selbstständig fertig gebacken werden, ohne dass der Benutzer den Garprozess beenden muss. Der zu erkennende bestimmte Gargrad des Garguts ist in diesem Fall der Gargrad, an dem das Gargut fertig gegart ist. Zu diesem Zeitpunkt kann der Garprozess beendet werden, um das Gargut nicht weiter zu garen und ggfs. im Garraum abkühlen zu lassen.

Gemäß einem weiteren Aspekt der vorliegenden Erfindung weist das Verfahren wenigstens den weiteren Schritt auf:
- Benachrichtigen eines Benutzers über das Beeinflussen des Garprozesses.
Hierdurch kann der Benutzer darauf hingewiesen werden, dass das Gargut den bestimmten Gargrad, welcher erkannt werden soll, erreicht hat, so dass der Benutzer ggfs. hierauf reagieren kann. Beispielsweise kann ein fertiggegartes Gargut wie z.B. ein Brot, ein Kuchen oder dergleichen dann vom Benutzer aus dem Garraum entnommen werden, um außerhalb des Garraums abzukühlen. Das Benachrichtigen des Benutzers kann z.B. über eine Anzeige des Küchengeräts, über ein akustisches Signal des Küchengeräts, über ein optisches Signal des Küchengeräts und bzw. oder über eine Benachrichtigung z.B. mittels einer App auf das Mobiltelefon oder dergleichen des Benutzers erfolgen.

Die vorliegende Erfindung betrifft auch ein Küchengerät, vorzugsweise einen kombinierten Dampfgarer oder einen Backofen, mit einen Garraum, in welchem ein Gargut gegart, vorzugsweise gebacken, werden kann, wenigstens eine Gasaustauschöffnung, durch welche hindurch Gas zwischen dem Garraum und der Umgebung des Garraums, vorzugsweise der Umgebung des Küchengeräts, ausgetauscht werden kann, wenigstens einer Gasaustauschvorrichtung, welche ausgebildet ist, die Gasaustauschöffnung durch Öffnungsvorgänge aktiv zu öffnen und bzw. oder zu schließen, und einer Steuerungseinheit, welche ausgebildet ist, die Gasaustauschvorrichtung zu betätigen und bzw. oder die Betätigung der Gasaustauschvorrichtung zu erfassen und bzw. oder den Zustand der Gasaustauschvorrichtung zu erfassen, wobei die Steuerungseinheit ferner ausgebildet ist, ein Verfahren wie zuvor beschrieben auszuführen. Auf diese Art und Weise können die zuvor beschriebenen Verfahren umgesetzt und genutzt werden.

Gemäß einem Aspekt der vorliegenden Erfindung weist das Küchengerät ferner einen Luftfeuchtigkeitssensor auf, welcher ausgebildet und angeordnet ist, die Luftfeuchtigkeit innerhalb des Garraums zu erfassen, wobei der Luftfeuchtigkeitssensor ferner ausgebildet ist, die erfasste Luftfeuchtigkeit des Garraums der Steuerungseinheit zur Verfügung zu stellen. Auf diese Art und Weise kann die Feuchtigkeit der Luft im Garraum sensorisch erfasst und der Steuerungseinheit zur Verfügung gestellt werden, um in Abhängigkeit der erfassten Feuchtigkeit die Gasaustauschvorrichtung der Gasaustauschöffnung zu betätigen. Basierend auf dieser Betätigung der Gasaustauschvorrichtung der Gasaustauschöffnung können dann die zuvor beschriebenen Verfahren ausgeführt werden.

Mehrere Ausführungsbeispiele der Erfindung sind in den Zeichnungen rein schematisch dargestellt und werden nachfolgend näher beschrieben. Es zeigt
- Figur 1: eine schematische Darstellung eines Küchengeräts zur Umsetzung erfindungsgemäßer Verfahren;
- Figur 2: ein Ablaufdiagramm eines ersten erfindungsgemäßen Verfahrens;
- Figur 3: ein Ablaufdiagramm eines zweiten erfindungsgemäßen Verfahrens;
- Figur 4: ein Ablaufdiagramm eines dritten erfindungsgemäßen Verfahrens;
- Figur 5: ein Diagramm einer gemessenen Backofenmittentemperatur über der Zeit;
- Figur 6: ein Diagramm eines gemessenen Taupunkts sowie eines erfassten Gasaustauschvorrichtungnzustands über der Zeit;
- Figur 7: ein Diagramm der Anzahl von Öffnungsvorgängen einer Gasaustauschvorrichtung pro vorbestimmtem Zeitintervall über der Zeit;
- Figur 8: ein Diagramm einer Amplitude eines Ausgangs eines Butterworth-Filters dritter Ordnung über der Zeit;
- Figur 9: ein Ablaufdiagramm eines vierten erfindungsgemäßen Verfahrens;
- Figur 10: ein Ablaufdiagramm eines fünften erfindungsgemäßen Verfahrens;
- Figur 11: ein Ablaufdiagramm eines sechsten erfindungsgemäßen Verfahrens;
- Figur 12: ein Ablaufdiagramm eines siebten erfindungsgemäßen Verfahrens; und
- Figur 13: ein Diagramm einer Grenzfrequenz eines Butterworth-Filters über der Ableitung des Verlaufs.

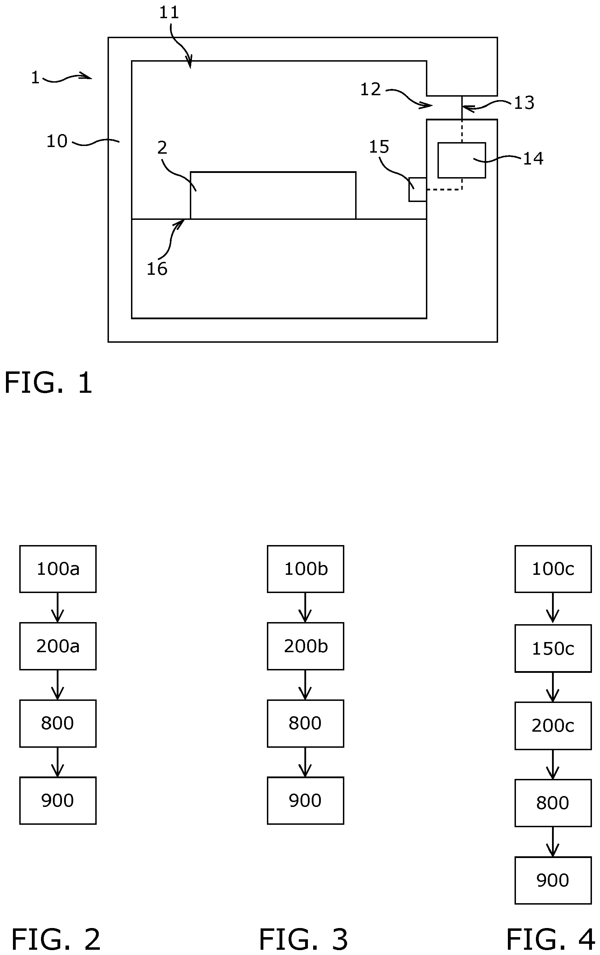

Die Figur 1 zeigt ein Küchengerät 1, welches ein kombinierter Dampfgarer 1 oder ein Backofen 1 sein kann. Das Küchengerät weist ein Gehäuse 10, welches einen Garraum 11 umschließt. Der Garraum 11 ist für einen Benutzer durch eine Öffnung zugänglich, welche mittels einer Tür verschlossen werden kann (nicht dargestellt). Innerhalb des Garraums 11 ist eine Garguthalterung 16 in Form eines Backblechs 16 entnehmbar angeordnet, auf der ein Gargut 2 wie z.B. ein Teig 2, hier in der Form eines Kastenkuchens 2 innerhalb einer Kastenform, durch Backen gegart werden kann.

Um die Feuchtigkeit der Luft des Garraums 11 regulieren zu können, ist der Garraum 11 über eine Gasaustauschöffnung 12, in Form einer Luftaustauschöffnung 12 mit der Umgebung verbunden, so dass Luft zwischen dem Garraum 11 und der Umgebung über die Luftaustauschöffnung 12 ausgetauscht werden kann. Die Luftaustauschöffnung 12 kann dabei über eine Gasaustauschvorrichtung 13 in Form einer Klappe 13 aktiv geöffnet sowie geschlossen werden, um einen Luftaustausch nur bei Bedarf als Garraumdurchspülung gezielt vorzunehmen und ansonsten die Luft im Garraum 11 von der Umgebung zu trennen.

Das aktive Öffnen und Schließen der Klappe 13 kann mittels eine Antriebs (nicht dargestellt) erfolgen, welcher von einer Steuerungseinheit 14 gesteuert werden kann. Das Öffnen und Schließen der Klappe 13 kann zu beliebigen Zeitpunkten und damit über beliebige Zeitdauern oder über konstante vorbestimmte Zeitintervalle erfolgen, welche mit einem Öffnen der Klappe 13 beginnen und mit einem Schließen der Klappe 13 enden. Somit ist der Steuerungseinheit 14 bekannt, wann ein Öffnen und Schließen der Klappe 13 erfolgt und wie lange dies dauert bzw. wann und wie häufig ein Öffnen und Schließen der Klappe 13 für ein vorbestimmtes Zeitintervall erfolgt.

Ferner weist das Küchengerät 1 im Inneren des Garraums 11 einen Luftfeuchtigkeitssensor 15 auf, welcher signalübertragend mit der Steuerungseinheit 14 verbunden ist. Hierdurch kann der Steuerungseinheit 14 eine sensorisch erfasste Feuchtigkeit der Luft des Garraums 11 zur Verfügung gestellt werden, um die Garraumdurchspülung durch Betätigen der Klappe 13 der Luftaustauschöffnung 12 durchführen zu können. Unter einem Betätigen der Klappe 13 der Luftaustauschöffnung 12 soll dabei das einmalige Öffnen und anschließende Schließen der Klappe 13 der Luftaustauschöffnung 12 verstanden werden.

Um einen Gargrad des Garguts 2 zu bestimmen, ist es bekannt, die Feuchtigkeit im Garraum 11 auszuwerten. Diese kann üblicherweise direkt mittels des Luftfeuchtigkeitssensors 15 erfasst oder indirekt über den Sauerstoffgehalt des Garraums 11 ermittelt werden. Erfindungsgemäß soll stattdessen die Betätigung der Klappe 13 der Luftaustauschöffnung 12 hierzu verwendet werden. Hierzu stehen erfindungsgemäße verschiedene Ansätze wie folgt zur Verfügung:
Figur 2 zeigt ein Ablaufdiagramm eines ersten erfindungsgemäßen Verfahrens. In einem ersten Schritt 100a wird die Zeitdauer der Öffnungsvorgänge der Klappe 13 erfasst. In einem zweiten Schritt 200a wird die erfasste Zeitdauer der Öffnungsvorgänge der Klappe 13 mit einer vorbestimmten Zeitdauer verglichen. Wird die vorbestimmte Zeitdauer erreicht, wird in einem dritten Schritt 800 der Garprozess beeinflusst.

Hierbei wird - sehr vereinfachend - davon ausgegangen, dass die Menge Wasser, welche z.B. bei einem Backvorgang eines speziellen Kuchens 2 oder anderen Garguts 2 abgegeben wird, durch die im Teig 2 vorhandene Menge Wasser, die Form des Kuchens 2, die ggfs. diffusionshemmende Abgrenzung des Teigs 2 durch Papierförmchen, Backform etc., das Diffusionsverhalten des Wassers im langsam garenden Teig 2 und der Temperaturverlauf im Küchengerät 1 im Wesentlichen vorgeben, wann im Backprozess wie viel Wasser in Form von Dampf vom Kuchen 2 abgegeben wird. Wenn die Menge der abgegebenen Feuchtigkeit als Funktion der Zeit bei einem bestimmten Kuchen 2 immer gleich ist und der Luftfeuchtigkeitssensor 15 sowie die Betätigung der Klappe 13 durch die Steuerungseinheit 14 sowie die für die Druckverhältnisse wichtigen Lüfter reproduzierbar arbeiten, wird vom Start des Backvorgangs bis zum Zeitpunkt, an dem der Kuchen 2 gar ist, immer eine definierte Menge Wasser abgeführt.

Wird somit die Zeitdauer der geöffneten Klappe 13 erfasst und mit einem bekannten Zeitpunkt, an dem eine definierte Menge Wasser aus dem Kuchen 2 als Dampf aus dem Garraum 11 abgeführt wurde, verglichen, kann der Zeitpunkt des Garprozesses erkannt werden, an dem gerade diese Menge Wasser aus dem Kuchen 2 abgeführt wurde. Somit kann der entsprechende Gargrad des Kuchens 2 über die Betätigung der Klappe 13 erkannt und hierauf reagiert werden.

Figur 3 zeigt ein Ablaufdiagramm eines zweiten erfindungsgemäßen Verfahrens. In einem ersten Schritt 100b wird die Anzahl von Öffnungsvorgängen der Klappe 13 erfasst, wobei die Öffnungsvorgänge eine vorbestimmte konstante Zeitdauer aufweisen. In einem zweiten Schritt 200b wird die erfasste Anzahl von Öffnungsvorgängen der Klappe 13 mit einer vorbestimmten Anzahl verglichen. Wird die vorbestimmte Anzahl erreicht, wird in einem dritten Schritt 800 der Garprozess beeinflusst.

Das zweite erfindungsgemäße Verfahren entspricht somit grundsätzlich dem ersten erfindungsgemäßen Verfahren; lediglich der Parameter, welcher auf das Erreichen eines vorbestimmten Wertes überprüft wird, wird verändert.

Figur 4 zeigt ein Ablaufdiagramm eines dritten erfindungsgemäßen Verfahrens. In einem ersten Schritt 100c wird die Anzahl von Öffnungsvorgängen der Klappe 13 erfasst, wobei die Öffnungsvorgänge eine vorbestimmte konstante Zeitdauer aufweisen. In einem zweiten Schritt 150c wird die Zeitdauer der Öffnungsvorgänge der Klappe 13 durch Multiplizieren der erfassten Anzahl von Öffnungsvorgängen der Klappe 13 mit der vorbestimmten konstanten Zeitdauer eines Öffnungsvorgangs bestimmt. In einem dritten Schritt 200c wird die bestimmte Zeitdauer der Öffnungsvorgänge der Klappe 13 mit einer vorbestimmten Zeitdauer verglichen. Wird die vorbestimmte Zeitdauer erreicht, wird in einem dritten Schritt 800 der Garprozess beeinflusst.

Das dritte erfindungsgemäße Verfahren rechnet somit zuerst die erfasste Anzahl der Öffnungsvorgänge in eine Zeitdauer um, welche dann - wie bei dem ersten erfindungsgemäßen Verfahren - mit einer vorbestimmten Zeitdauer verglichen wird.

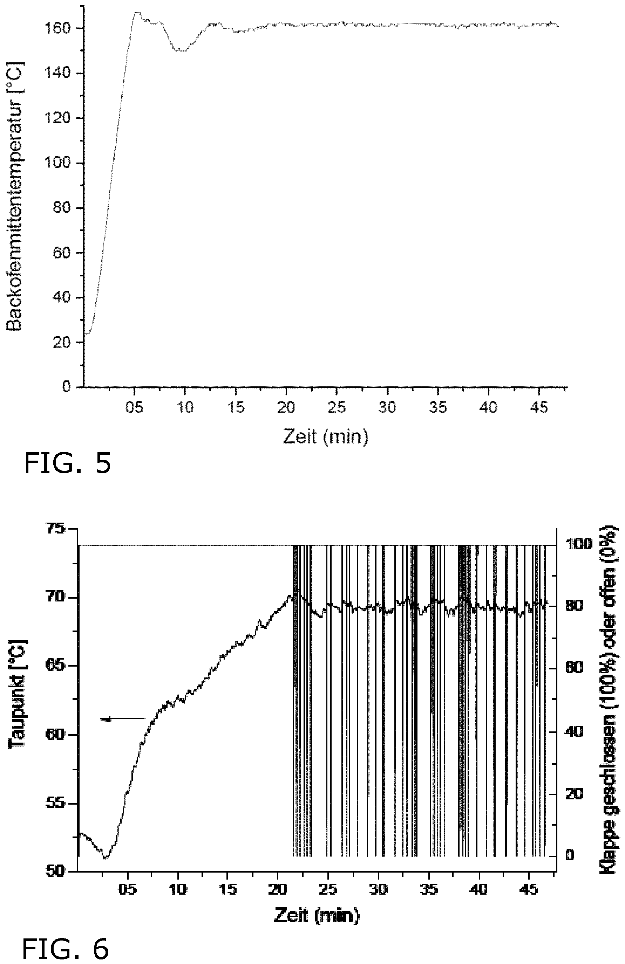

Die weiteren erfindungsgemäßen Verfahren nutzen einen anderen Ansatz, die Betätigung der Klappe 13 der Luftaustauschöffnung 12 zur Bestimmung des Gargrad eines Garguts 2 zu verwenden. Hierzu sollen zunächst die Diagramme der Figuren 5 bis 8 betrachtet werden.

Ein wesentliches Bauteil der Regeltechnik in einem Kombidampfgarer 1 ist die Klappe 13 der Luftaustauschöffnung 12, über welche der Luftaustausch des Garraums 11 gezielt beeinflusst werden kann. Durch eine Erhöhung oder Verringerung des Luftaustauschs kann auch die im Garraum 11 vorhandene Feuchtigkeitsmenge beeinflusst werden. Diese Funktion wird in bestimmten Automatikprogrammen genutzt, um bei einem Backprozess die Feuchtigkeit im Garraum 11 gezielt auf einen für den Backprozess vorteilhaften Wert einzustellen. Die für die Regelung notwendige Information über die im Garraum 11 vorhandene Feuchtigkeit kann z.B. mittels eines Wärmeflussfühlers gewonnen werden. Der Taupunkt wird dabei als Maß für den Feuchtegehalt der Luft im Garraum 11 herangezogen.

Die beiden Diagramme der Figuren 5 und 6 zeigen am Beispiel des Backvorgangs eines Kastenkuchens 2 den Verlauf der Backofenmittentemperatur, des Taupunkts und des Zustands der Klappe 13 in Abhängigkeit von der Zeit. Die für den Backvorgang gewünschte Feuchte ist über den Sollwert für den Taupunkt von 70°C definiert.

Zunächst wird der Kombidampfgarer 1 aufgeheizt. Nach ca. 5 Minuten hat der Garraum 11 die Zieltemperatur von 160°C erreicht, siehe Figur 5.

Am Anfang des Backvorgangs gibt der kalte Teig 2 kaum Feuchtigkeit ab und der Taupunkt ist noch relativ niedrig. Daher wird die gewünschte Feuchte nicht erreicht und folglich bleibt die Klappe 13 geschlossen, siehe Figur 6.

Wenn der Teig 2 wärmer wird, steigt die Abgabe von Feuchtigkeit. Da die Klappe 13 geschlossen und der Garraum 11 hierdurch relativ dicht abgeschlossen ist, spiegelt sich diese Wasserabgabe des Kuchens 2 im steigenden Taupunktsignal wieder, siehe Figur 6.

Nach ca. 21 Minuten wird der eingestellte Feuchtewert im Garraum 11 überschritten (Taupunkt = 70°C). Jetzt öffnet die Klappe 13 für eine definierte Zeit, d.h. für eine vorbestimmte konstante Zeitdauer, um die Feuchtigkeit im Garraum 11 zu reduzieren, siehe Figur 6. Prinzipiell kann die Dauer bzw. die Anzahl der Öffnungen der Klappe 13 durch eine vorgegebene Zeit bestimmt sein oder anhand einer Messung des Feuchteverlaufs geregelt werden.

Im weiteren Verlauf des Backvorgangs wird der Taupunkt und somit die Feuchte im Garraum 11 durch die Steuerung der Klappe 13 konstant auf ca. 70°C gehalten, siehe Figur 6. Folglich kann die Feuchte im Garraum 11 nicht für die Backendeerkennung genutzt werden.

Anstelle des gemessenen Feuchtewerts kann jedoch erfindungsgemäß die Klappensteuerung selbst als Indikator für die Menge der ausgetretenen Feuchte und somit für das Backende genutzt werden. Grundsätzlich bedeutet eine längere Klappenöffnungszeit bei konstantem Taupunkt, dass mehr Feuchtigkeit vom Gargut 2 abgegeben wird. Dieser Zusammenhang wird nun für die Backendeerkennung genutzt.

Im Laufe des Backvorgangs bildet sich auf dem Kuchen 2 eine Kruste, welche die Feuchtigkeitsabgabe verringert. Dadurch steigt die Feuchtigkeit im Backofen 1 nach dem Schließen der Klappe 13 langsamer und der Abstand zwischen den Klappenöffnungen nimmt zu. Um festzustellen, wann der Kuchen 2 fertig ist und die Feuchtigkeitsabgabe dadurch verringert wird, wird also im Prinzip das Verhältnis von Zeiten mit geschlossener Klappe 13 und Zeiten mit offener Klappe 13 untersucht.

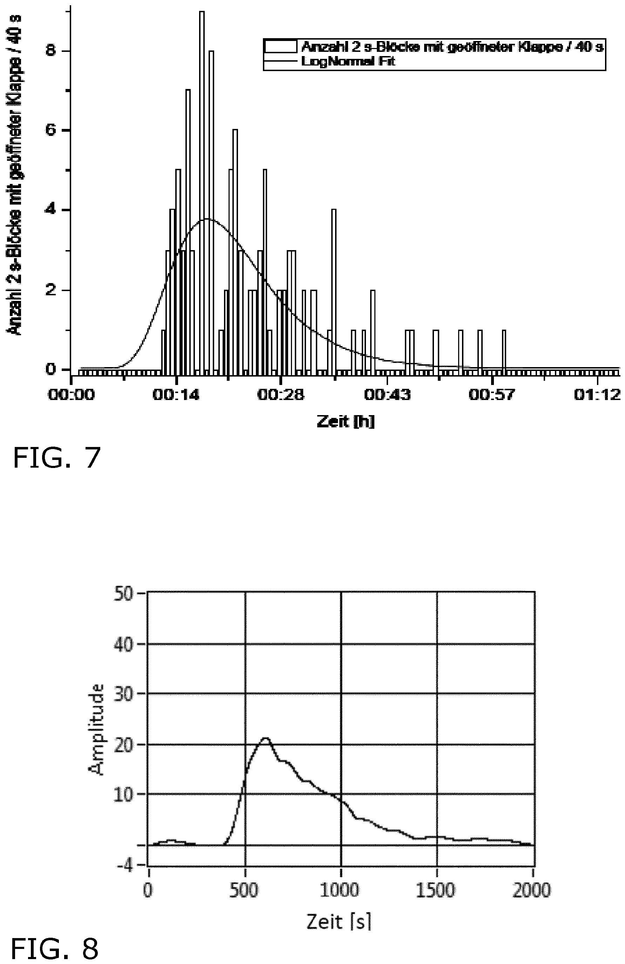

Da der Prozess nicht kontinuierlich abläuft, sondern auch Schwankungen unterliegt, unterliegt die Größe "Anteil der Zeit mit geöffneter Klappe" großen Schwankungen. Dies ist im folgenden Beispiel eines Garversuchs mit Streifengebäck 2 zu sehen, in dem über ein Zeitfenster von 40 s gezählt wurde, wie viele zwei-Sekunden-lange Zeitfenster die Klappe 13 geöffnet war. Das entsprechende Diagramm ist in Figur 7 dargestellt.

Um einen stetigen Verlauf zu erhalten, wurde im Graphen der Figur 7 nachträglich eine logarithmische Funktion an die Messwerte angefittet. Das Maximum dieses Verlaufs passt grob zu dem Zeitpunkt, an dem der Kuchen 2 seinen optimalen Garzustand erreicht.

Da das Ende des Backvorgangs während des laufenden Prozesses erkannt werden soll, wird anstelle des Fits ein Butterworth-Filter mit dem Öffnungszustand der Klappe 13 als Eingangsparameter eingesetzt. Untersuchungen haben gezeigt, dass ein Butterworth-Filter dritter Ordnung besonders geeignet ist. Alternativ wären auch andere dynamische Funktionen, welche auf Differenzialgleichungen basieren, denkbar. Ein Vorzug des Butterworth-Filters liegt darin, dass durch die Veränderung von nur einem Parameter der Verlauf des Ausgangssignals an die Bedürfnisse der jeweiligen Regelanwendung angepasst werden kann. Der Parameter, welcher den Butterworth-Filter wesentlich bestimmt, ist die Grenzfrequenz.

Der Graph der Figur 8 zeigt das vom Butterwort-Filter dritter Ordnung bearbeitete Klappensteuerungssignal eines anderen Backversuchs. Dargestellt ist die Amplitude des Ausgangssignals des Butterworth-Filters als Funktion der Zeit für einen Backversuch weit über den Zeitpunkt des optimalen Gargrads hinaus. Dieser Verlauf lässt sich durch eine geeignete Auswahl einer Grenzfrequenz so anpassen, dass das Maximum mit dem Backzeitende übereinstimmt. Bei dem ersten Maximum des Graphen der Figur 8 bei ca. 100 s handelt es sich um ein bekanntes Artefakt des Messaufbaus.

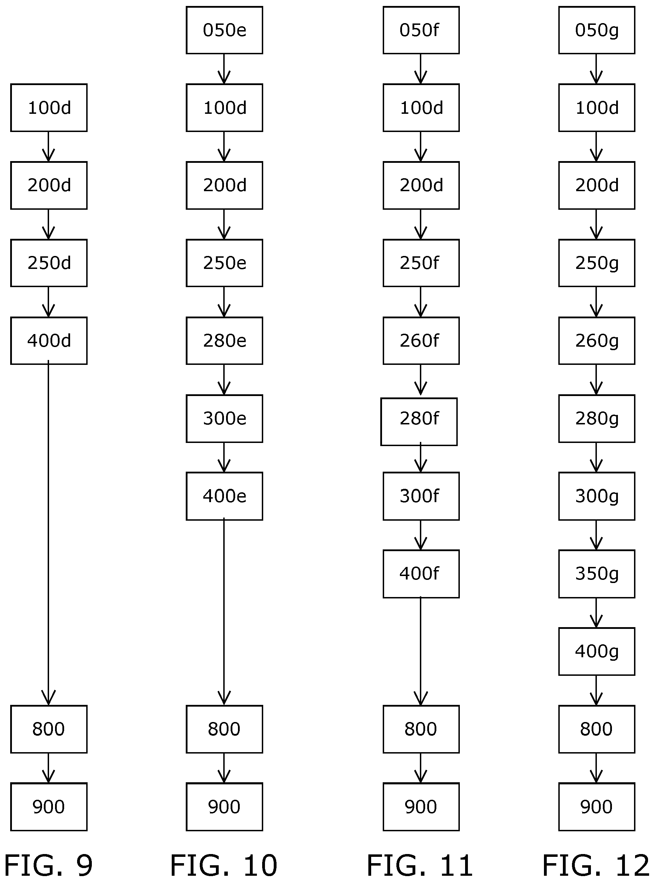

Basierend auf den zuvor beschriebenen Überlegungen und Erkenntnissen kann ein viertes erfindungsgemäßes Verfahren wie in der Figur 9 dargestellt nun derart ablaufen, dass in einem ersten Schritt 100d die Anzahl von Öffnungsvorgängen der Klappe 13 innerhalb eines vorbestimmten Zeitintervalls erfasst werden. In einem zweiten Schritt 200d wird ein zeitlicher Verlauf der Anzahl von Öffnungsvorgängen der Klappe 13 pro vorbestimmtem Zeitintervall erstellt. In einem dritten Schritt 250d wird ein stetiger zeitlicher Verlauf aus dem erstellten zeitlichen Verlauf der Anzahl von Öffnungsvorgängen der Klappe 13 pro vorbestimmtem Zeitintervall erstellt. In einem vierten Schritt 400d wird der erstellte stetige zeitliche Verlauf der Anzahl von Öffnungsvorgängen der Klappe 13 pro vorbestimmtem Zeitintervall auf das Auftreten eines Maximums überprüft. Tritt ein Maximum auf, wird in einem fünften Schritt 800 der Garprozess beeinflusst.

Auf diese Art und Weise können die zuvor beschriebenen Überlegungen und Erkenntnisse in einem Verfahren angewendet werden, um einen bestimmten Gargrad des Garguts 2 zu erkennen und hierauf zu reagieren.

Figur 10 zeigt ein Ablaufdiagramm eines fünften erfindungsgemäßen Verfahrens. In einem ersten Schritt 050e wird eine Garguteigenschaft, in diesem Fall eine Teigart wie z.B. "Rührkuchen", durch eine Eingabe eines Benutzers erfasst. In einem zweiten Schritt 100d wird die Anzahl von Öffnungsvorgängen der Klappe 13 innerhalb eines vorbestimmten Zeitintervalls erfasst. In einem dritten Schritt 200d wird ein zeitlicher Verlauf der Anzahl von Öffnungsvorgängen der Klappe 13 pro vorbestimmtem Zeitintervall erstellt. In einem vierten Schritt 250e wird ein erster stetiger zeitlicher Verlauf aus dem erstellten zeitlichen Verlauf der Anzahl von Öffnungsvorgängen der Klappe 13 pro vorbestimmtem Zeitintervall erstellt.

In einem fünften Schritt 280e der erste erstellte stetige zeitliche Verlauf der Anzahl von Öffnungsvorgängen der Klappe 13 pro vorbestimmtem Zeitintervall auf wenigstens ein vorbestimmtes Kriterium überprüft. Das vorbestimmte Kriterium kann beispielsweise die Amplitude des ersten Maximums des ersten stetigen zeitlichen Verlaufs sein. Wird dieses Kriterium erfüllt, so wird in einem sechsten Schritt 300e ein zweiter stetiger zeitlicher Verlauf aus dem erstellten zeitlichen Verlauf der Anzahl von Öffnungsvorgängen der Klappe 13 pro vorbestimmtem Zeitintervall in Abhängigkeit des erfüllten vorbestimmten Kriteriums erstellt. Dieser zweite erstellte stetige zeitliche Verlauf der Anzahl von Öffnungsvorgängen der Klappe 13 pro vorbestimmtem Zeitintervall wird in einem siebten Schritt 400e auf das Auftreten eines Maximums überprüft. Tritt ein Maximum auf, wird in einem achten Schritt 800 der Garprozess beeinflusst.

Diesem erfindungsgemäßen vierten Verfahren liegt die Erkenntnis zugrunde, dass die optimalen Parameter von der Menge des Teigs, von der Teigart und von der Form des Backgutes 2 wie z.B. Kastenkuchen statt Flachkuchen abhängen können. Wenn die Teigart z.B. durch eine Nutzereingabe bekannt ist, soll die Form des Backgutes 2 aus dem Messsignal abgeleitet werden. Dadurch muss der Nutzer z.B. nur eingeben, dass er einen Rührteig backen will aber nicht, ob es sich um einen Kastenkuchen 2, einen Flachkuchen 2 oder um Small Cakes handelt.

Zu diesem Zweck lässt man einen Butterworth-Filter mit einer relativ kleinen Grenzfrequenz während des Backvorgangs mitlaufen und wertet diesen aus, um die Form des Gebäcks 2 festzustellen und einen darauf optimierten Filter mit einer u.U. anderen Grenzfrequenz für die eigentliche Backendeerkennung zu starten.

Es können verschiedene Kriterien zur Unterscheidung der Gebäckform herangezogen werden:
- Amplitude des ersten Maximums des durch den Butterworth-Filter bearbeiteten Signals,
- Amplitude des ersten Maximums der ersten Ableitung des Signals,
- Dauer bis zum ersten Anstieg des Signals,
- Dauer bis zum ersten Anstieg der Ableitung des Signals, oder
- eine Kombination aus den obigen Ansätzen.

Damit der nachträglich gestartete Butterworth-Filter über den gesamten Backvorgang angewendet werden kann, ist es vorteilhaft, einen ausreichend großen Speicher z.B. der Steuerungseinheit 14 vorzusehen, um das Speichern des Zustandsverlaufs der Klappe 13 zu ermöglichen.

Figur 11 zeigt ein Ablaufdiagramm eines sechsten erfindungsgemäßen Verfahrens. In einem ersten Schritt 050f wird eine Garguteigenschaft, in diesem Fall eine Teigart wie z.B. "Rührkuchen", durch eine Eingabe eines Benutzers erfasst. In einem zweiten Schritt 100d wird die Anzahl von Öffnungsvorgängen der Klappe 13 innerhalb eines vorbestimmten Zeitintervalls erfasst. In einem dritten Schritt 200d wird ein zeitlicher Verlauf der Anzahl von Öffnungsvorgängen der Klappe 13 pro vorbestimmtem Zeitintervall erfasst. In einem vierten Schritt 250f wird ein erster stetiger zeitlicher Verlauf aus dem erstellten zeitlichen Verlauf der Anzahl von Öffnungsvorgängen der Klappe 13 pro vorbestimmtem Zeitintervall erstellt.

In einem fünften Schritt 260f wird eine Mehrzahl zweiter stetiger zeitlicher Verläufe aus dem erstellten zeitlichen Verlauf der Anzahl von Öffnungsvorgängen der Klappe 13 pro vorbestimmtem Zeitintervall, welche sich hinsichtlich wenigstens eines Parameters ihres Erstellens 260f unterscheiden. Dieser Parameter kann bei der Anwendung von Butterworth-Filtern dessen Grenzfrequenz sein.

In einem sechsten Schritt 280f wird der erste erstellte stetige zeitliche Verlauf der Anzahl von Öffnungsvorgängen der Klappe 13 pro vorbestimmtem Zeitintervall auf wenigstens ein vorbestimmtes Kriterium überprüft, wie hinsichtlich des fünften erfindungsgemäßen Verfahrens beschrieben. Bei Erfüllen wenigstens eines vorbestimmten Kriteriums wird in einem siebten Schritt 300f ein zweiter erstellter stetiger zeitlicher Verlauf aus der Mehrzahl zweiter erstellter stetiger zeitlicher Verläufe in Abhängigkeit des erfüllten vorbestimmten Kriteriums ausgewählt. In einem achten Schritt 400f wird der ausgewählte zweite erstellte stetige zeitliche Verlauf der Anzahl von Öffnungsvorgängen der Klappe 13 pro vorbestimmtem Zeitintervall auf das Auftreten eines Maximums überprüft. Tritt ein Maximum auf, wird in einem neunten Schritt 800 der Garprozess beeinflusst.

In diesem Fall werden, alternativ zum nachträglichen Start eines weiteren Butterworth-Filters gemäß des fünften erfindungsgemäßen Verfahrens, mehrere Butterworth-Filter mit unterschiedlichen Grenzfrequenzen parallel mitlaufen gelassen und aus diesen Butterworth-Filtern anhand der oben beschriebenen Auswertung des Butterworth-Filters mit der kleinsten Grenzfrequenz der optimale Butterworth-Filter ausgewählt.

Figur 12 zeigt ein Ablaufdiagramm eines siebten erfindungsgemäßen Verfahrens. In einem ersten Schritt 050g wird eine Garguteigenschaft, in diesem Fall eine Teigart wie z.B. "Rührkuchen", durch eine Eingabe eines Benutzers erfasst. In einem zweiten Schritt 100d wird die Anzahl von Öffnungsvorgängen der Klappe 13 innerhalb eines vorbestimmten Zeitintervalls erfasst. In einem dritten Schritt 200d wird ein zeitlicher Verlauf der Anzahl von Öffnungsvorgängen der Klappe 13 pro vorbestimmtem Zeitintervall erfasst. In einem vierten Schritt 250g wird ein erster stetiger zeitlicher Verlauf aus dem erstellten zeitlichen Verlauf der Anzahl von Öffnungsvorgängen der Klappe 13 pro vorbestimmtem Zeitintervall erstellt. In einem fünften Schritt 260g eine Mehrzahl zweiter stetiger zeitlicher Verläufe aus dem erstellten zeitlichen Verlauf der Anzahl von Öffnungsvorgängen der Klappe 13 pro vorbestimmtem Zeitintervall erstellt, welche sich hinsichtlich wenigstens eines Parameters ihres Erstellens 260g unterscheiden.

In einem sechsten Schritt 280g wird der erste erstellte stetige zeitliche Verlauf der Anzahl von Öffnungsvorgängen der Klappe 13 pro vorbestimmtem Zeitintervall auf wenigstens ein vorbestimmtes Kriterium überprüft. In dem Fall des Nicht-Erfüllens wenigstens eines vorbestimmten Kriteriums wird in einem siebten Schritt 300g der zweite erstellte stetige zeitliche Verlauf aus der Mehrzahl zweiter erstellter stetiger zeitlicher Verläufe beendet, dessen Parameter mit dem nicht-erfüllten Kriterium in einem vorbestimmten Zusammenhang steht. Hierdurch kann die Anzahl der parallel zu erstellenden zweiten stetigen zeitlichen Verläufe fortlaufend reduziert werden.

In einem achten Schritt 350g wird die Anzahl der zweiten erstellten stetigen zeitlichen Verläufe der Anzahl von Öffnungsvorgängen der Klappe 13 pro vorbestimmtem Zeitintervall überprüft. Wird die Anzahl der zweiten erstellten stetigen zeitlichen Verläufe der Anzahl von Öffnungsvorgängen der Klappe 13 pro vorbestimmtem Zeitintervall auf einen verbliebenen zweiten erstellten stetigen zeitlichen Verlauf der Anzahl von Öffnungsvorgängen der Klappe 13 pro vorbestimmtem Zeitintervall reduziert, wird in einem neunten Schritt 400g der verbliebene zweite erstellte stetige zeitliche Verlauf der Anzahl von Öffnungsvorgängen der Klappe 13 pro vorbestimmtem Zeitintervall auf das Auftreten eines Maximums überprüft. Tritt ein Maximum auf, wird in einem neunten Schritt 800 der Garprozess beeinflusst.

Diesem siebten erfindungsgemäßen Verfahren liegt die Erkenntnis zugrunde, dass die Butterworth-Filter nach und nach deaktiviert werden können, sobald aufgrund der oben beschriebenen Kriterien feststeht, dass der Butterworth-Filter nicht benötigt wird, da die entsprechende Gebäckform ausgeschlossen werden kann. Hierdurch kann Prozessorleistung und bzw. oder Speicher der Steuerungseinheit eingespart werden.

Jedes der sieben erfindungsgemäßen Verfahren weist den Schritt 800 auf, mit dem der Garprozess beeinflusst werden kann. Dies kann z.B. eine Veränderung der Soll-Temperatur des Garprozesses sein. Vorzugswiese wird die Veränderung jedoch derart ausgeführt, dass der Garprozess beendet wird. Hierdurch können die erfindungsgemäßen Verfahren zur Erkennung eines Endes eines Garprozesses verwendet werden, wenn das Gargut seinen möglichst optimalen Gargrad erreicht hat und die Fortführung des Garprozesses über diesen Zeitpunkt hinaus zu einer Verschlechterung des Ergebnisses des Garprozesses führen würde. Dies kann durch eine selbsttätige Beendigung des Garprozesses durch das Küchengerät vermieden werden.

In jedem Fall kann durch einen weiteren Schritt 900 der Benutzer über das Beeinflussen 800 wie z.B. über das Beenden 800 des Garprozesses benachrichtigt werden. Dies kann optisch und bzw. oder akustisch erfolgen. Dies kann für den Benutzer sehr praktisch sein, um bei Bedarf ebenfalls auf den erreichten Gargrad des Garguts 2 reagieren zu können. Beispielsweise kann es erforderlich sein, bei einem fertig gebackenen Kuchen 2 nicht nur dessen Backprozess durch das Küchengerät 2 selbsttätig zu beenden sondern den Kuchen 2 zusätzlich vom Benutzer aus dem Garraum 11 zu entfernen, damit der Kuchen 2 abkühlen kann. Alternativ kann die Temperatur im Garraum vom Gerät aktiv verringert werden.

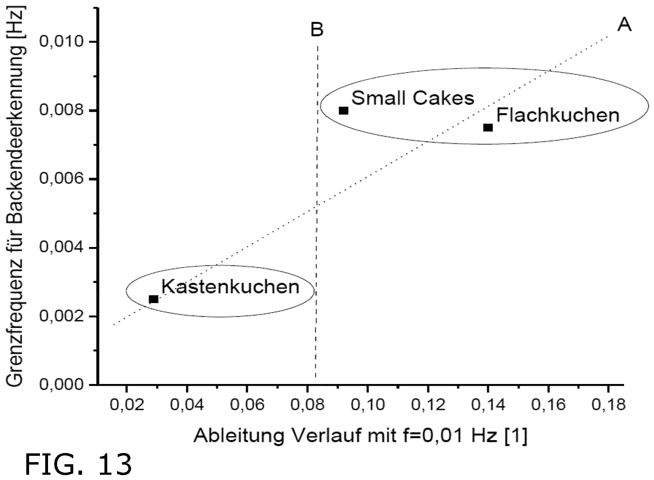

Figur 13 zeigt ein Diagramm einer Grenzfrequenz eines Butterworth-Filters über der Ableitung des Verlaufs. Genauer gesagt zeigt die Figur 13 den Zusammenhang zwischen dem ersten Hochpunkt der Ableitung des Ausgangssignals eines Butterworth-Filters mit einer Grenzfrequenz von f = 0,01 Hz und der gebäckspezifischen optimalen Grenzfrequenz für die Backendeerkennung. Hierbei wird beispielhaft die Unterscheidung von Kastenkuchen 2 mit einer für die Backendeerkennung benötigten Grenzfrequenz von f = 0,0025 Hz gegenüber Small Cakes bzw. Flachkuchen mit einer für die Backendeerkennung benötigten Grenzfrequenz von ca. f = 0,0075 Hz anhand der Amplitude des ersten Maximums der Ableitung des Verlaufs mit einem Butterworth-Filter mit der Grenzfrequenz von f = 0,01 Hz gezeigt.

Es ist denkbar, Wertebereiche für die Amplitude der Ableitung des Verlaufs mit einer Grenzfrequenz von f = 0,01 Hz anzunehmen und daraus die Grenzfrequenz für die Backendeerkennung abzuleiten (z.B. kleiner/größer Grenzwert B in dem Diagramm der Figur 13). Alternativ kann der Zusammenhang zwischen den beiden Größen durch eine Formel beschrieben werden. Die einfachste Möglichkeit wäre ein linearer Zusammenhang wie durch A in dem Diagramm der Figur 13 angedeutet.

Um unterschiedliche Temperaturen bei den oben beschriebenen erfindungsgemäßen Backvorgängen zu berücksichtigen, können Korrekturfaktoren eingesetzt werden. Im obigen Beispiel der Figur 13 wurden die Small Cakes 2 bei 150°C gebacken, während Kastenkuchen 2 und Flachkuchen 2 bei 159°C gebacken wurden. Dadurch wurden die Small Cakes 2 langsamer erwärmt als es bei 159°C der Fall gewesen wäre. Folglich wäre bei einer Backtemperatur von 159°C analog zu den beiden anderen Gebäcken 2 ein früherer und stärkerer Anstieg der Feuchteabgabe zu erwarten. D. h. der Wert auf der x-Achse müsste in positive Richtung verschoben werden. Die korrigierten Werte passen noch besser zu dem oben angenommenen linearen Zusammenhang.

Das obige Beispiel der Figur 13 zeigt, dass der Algorithmus zur Bestimmung der Grenzfrequenz für die Backendeerkennung temperaturabhängig ist. Die Anpassung des Algorithmus an die Temperatur kann z.B. als Tabelle (fest definierte Parametersätze für Temperaturbereiche) vorgegeben werden. Alternativ kann eine temperaturabhängige Parameteranpassung im Algorithmus erfolgen.

Der Nutzer kann über ein Nutzerinterface einen gewünschten Gargrad eingeben. Dies kann im Algorithmus durch eine Anpassung der Grenzfrequenz berücksichtigt werden. Beispiel:
Wenn eine stärkere Bräunung gewünscht ist, muss bei ansonsten gleichen Parametern eine kleinere Grenzfrequenz verwendet werden.

### Bezugszeichenliste (Bestandteil der Beschreibung)

- 1: Küchengerät; kombinierter Dampfgarer; Backofen
- 10: Gehäuse
- 11: Garraum
- 12: Gasaustauschöffnung; Luftaustauschöffnung
- 13: Gasaustauschvorrichtung; Klappe
- 14: Steuerungseinheit
- 15: Luftfeuchtigkeitssensor
- 16: Garguthalterung; Backblech

- 2: Gargut; Teig

- 050e-g: Erfassen einer Garguteigenschaft
- 100a-d: Erfassen der Zeitdauer der Öffnungsvorgänge
- 150c: Bestimmen der Zeitdauer der Öffnungsvorgänge
- 200a-c: Vergleichen der erfassten Zeitdauer der Öffnungsvorgänge
- 200d: Erstellen eines zeitlichen Verlaufs
- 250d: Erstellen eines stetigen zeitlichen Verlaufs
- 250e-g: Erstellen eines ersten stetigen zeitlichen Verlaufs
- 260f-g: Erstellen einer Mehrzahl zweiter stetiger zeitlicher Verläufe
- 280e-g: Überprüfen des ersten erstellten stetigen zeitlichen Verlaufs
- 300e: Erstellen eines zweiten stetigen zeitlichen Verlaufs
- 300f: Auswählen eines zweiten erstellten stetigen zeitlichen Verlaufs
- 300g: Beenden des zweiten erstellten stetigen zeitlichen Verlaufs
- 350g: Überprüfen der Anzahl der zweiten erstellten stetigen zeitlichen Verläufe
- 400d: Überprüfen des erstellten stetigen zeitlichen Verlaufs
- 400e: Überprüfen des zweiten erstellten stetigen zeitlichen Verlaufs
- 400f: Überprüfen des ausgewählten zweiten erstellten stetigen zeitlichen Verlaufs
- 400g: Überprüfen des verbliebenen zweiten erstellten stetigen zeitlichen Verlaufs
- 800: Beeinflussen des Garprozesses
- 900: Benachrichtigen eines Benutzers

## Patentansprüche

1. Verfahren zur Beeinflussung eines Garprozesses, vorzugsweise eines Backprozesses, bei einem Küchengerät (1), vorzugsweise bei einem kombinierten Dampfgarer (1) und bzw. oder bei einem Backofen (1),
wobei das Küchengerät (1) aufweist:
einen Garraum (11), in welchem ein Gargut (2) gegart, vorzugsweise gebacken, werden kann,
wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann, und
wenigstens eine Gasaustauschvorrichtung (13), welche ausgebildet ist, die Gasaustauschöffnung (12) durch Öffnungsvorgänge aktiv zu öffnen und/oder zu schließen,
wobei das Verfahren wenigstens die folgenden Schritte aufweist:
Erfassen (100a) der Zeitdauer der Öffnungsvorgänge der Gasaustauschvorrichtung (13),
Vergleichen (200a) der erfassten Zeitdauer der Öffnungsvorgänge der Gasaustauschvorrichtung (13) mit einer vorbestimmten Zeitdauer, und
bei Erreichen der vorbestimmten Zeitdauer, Beeinflussen (800) des Garprozesses.

2. Verfahren zur Beeinflussung eines Garprozesses, vorzugsweise eines Backprozesses, bei einem Küchengerät (1), vorzugsweise bei einem kombinierten Dampfgarer (1) und bzw. oder bei einem Backofen (1),
wobei das Küchengerät (1) aufweist:
einen Garraum (11), in welchem ein Gargut (2) gegart, vorzugsweise gebacken, werden kann,
wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann, und
wenigstens eine Gasaustauschvorrichtung (13), welche ausgebildet ist, die Gasaustauschöffnung (12) durch Öffnungsvorgänge mit einer vorbestimmten konstanten Zeitdauer aktiv zu öffnen und/oder zu schließen,
wobei das Verfahren wenigstens die folgenden Schritte aufweist:
Erfassen (100b) der Anzahl von Öffnungsvorgängen der Gasaustauschvorrichtung (13),
Vergleichen (200b) der erfassten Anzahl von Öffnungsvorgängen der Gasaustauschvorrichtung (13) mit einer vorbestimmten Anzahl, und
bei Erreichen der vorbestimmten Anzahl, Beeinflussen (800) des Garprozesses.

3. Verfahren zur Beeinflussung eines Garprozesses, vorzugsweise eines Backprozesses, bei einem Küchengerät (1), vorzugsweise bei einem kombinierten Dampfgarer (1) und bzw. oder bei einem Backofen (1),
wobei das Küchengerät (1) aufweist:
einen Garraum (11), in welchem ein Gargut (2) gegart, vorzugsweise gebacken, werden kann,
wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann, und
wenigstens eine Gasaustauschvorrichtung (13), welche ausgebildet ist, die Gasaustauschöffnung (12) durch Öffnungsvorgänge mit einer vorbestimmten konstanten Zeitdauer aktiv zu öffnen und/oder zu schließen,
wobei das Verfahren wenigstens die folgenden Schritte aufweist:
Erfassen (100c) der Anzahl von Öffnungsvorgängen der Gasaustauschvorrichtung (13),
Bestimmen (150c) der Zeitdauer der Öffnungsvorgänge der Gasaustauschvorrichtung (13) durch Multiplizieren der erfassten Anzahl von Öffnungsvorgängen der Gasaustauschvorrichtung (13) mit der vorbestimmten konstanten Zeitdauer eines Öffnungsvorgangs,
Vergleichen (200c) der bestimmten Zeitdauer der Öffnungsvorgänge der Gasaustauschvorrichtung (13) mit einer vorbestimmten Zeitdauer, und
bei Erreichen der vorbestimmten Zeitdauer, Beeinflussen (800) des Garprozesses.

4. Verfahren zur Beeinflussung eines Garprozesses, vorzugsweise eines Backprozesses, bei einem Küchengerät (1), vorzugsweise bei einem kombinierten Dampfgarer (1) und bzw. oder bei einem Backofen (1),
wobei das Küchengerät (1) aufweist:
einen Garraum (11), in welchem ein Gargut (2) gegart, vorzugsweise gebacken, werden kann,
wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann, und
wenigstens eine Gasaustauschvorrichtung (13), welche ausgebildet ist, die Gasaustauschöffnung (12) durch Öffnungsvorgänge mit einer vorbestimmten konstanten Zeitdauer aktiv zu öffnen und/oder zu schließen,
wobei das Verfahren wenigstens die folgenden Schritte aufweist:
Erfassen (100d) der Anzahl von Öffnungsvorgängen der Gasaustauschvorrichtung (13) innerhalb eines vorbestimmten Zeitintervalls,
Erstellen (200d) eines zeitlichen Verlaufs der Anzahl von Öffnungsvorgängen der Gasaustauschvorrichtung (13) pro vorbestimmtem Zeitintervall,
Erstellen (250d) eines stetigen zeitlichen Verlaufs aus dem erstellten zeitlichen Verlauf der Anzahl von Öffnungsvorgängen der Gasaustauschvorrichtung (13) pro vorbestimmtem Zeitintervall,
Überprüfen (400d) des erstellten stetigen zeitlichen Verlaufs der Anzahl von Öffnungsvorgängen der Gasaustauschvorrichtung (13) pro vorbestimmtem Zeitintervall auf das Auftreten eines Maximums, und
bei Auftreten eines Maximums, Beeinflussen (800) des Garprozesses.

5. Verfahren nach Anspruch 4 mit wenigstens dem vorangehenden Schritt:
Erfassen (050e) einer Garguteigenschaft, vorzugsweise einer Teigart, vorzugsweise durch eine Eingabe eines Benutzers,
wobei die Schritte des Erstellens (250d) eines stetigen zeitlichen Verlaufs und des Überprüfens (400d) des erstellten stetigen zeitlichen Verlaufs wie folgt ausgeführt werden:
Erstellen (250e) eines ersten stetigen zeitlichen Verlaufs aus dem erstellten zeitlichen Verlauf der Anzahl von Öffnungsvorgängen der Gasaustauschvorrichtung (13) pro vorbestimmtem Zeitintervall,
Überprüfen (280e) des ersten erstellten stetigen zeitlichen Verlaufs der Anzahl von Öffnungsvorgängen der Gasaustauschvorrichtung (13) pro vorbestimmtem Zeitintervall auf wenigstens ein vorbestimmtes Kriterium,
bei Erfüllen wenigstens eines vorbestimmten Kriteriums, Erstellen (300e) eines zweiten stetigen zeitlichen Verlaufs aus dem erstellten zeitlichen Verlauf der Anzahl von Öffnungsvorgängen der Gasaustauschvorrichtung (13) pro vorbestimmtem Zeitintervall in Abhängigkeit des erfüllten vorbestimmten Kriteriums,
Überprüfen (400e) des zweiten erstellten stetigen zeitlichen Verlaufs der Anzahl von Öffnungsvorgängen der Gasaustauschvorrichtung (13) pro vorbestimmtem Zeitintervall auf das Auftreten eines Maximums.

6. Verfahren nach Anspruch 4 oder 5 mit wenigstens dem vorangehenden Schritt:
Erfassen (050f) einer Garguteigenschaft, vorzugsweise einer Teigart, vorzugsweise durch eine Eingabe eines Benutzers,
wobei die Schritte des Erstellens (250d) eines stetigen zeitlichen Verlaufs, des Überprüfens (400d) des erstellten stetigen zeitlichen Verlaufs wie folgt ausgeführt werden:
Erstellen (250f) eines ersten stetigen zeitlichen Verlaufs aus dem erstellten zeitlichen Verlauf der Anzahl von Öffnungsvorgängen der Gasaustauschvorrichtung (13) pro vorbestimmtem Zeitintervall,
Erstellen (260f) einer Mehrzahl zweiter stetiger zeitlicher Verläufe aus dem erstellten zeitlichen Verlauf der Anzahl von Öffnungsvorgängen der Gasaustauschvorrichtung (13) pro vorbestimmtem Zeitintervall, welche sich hinsichtlich wenigstens eines Parameters ihres Erstellens (260f) unterscheiden,
Überprüfen (280f) des ersten erstellten stetigen zeitlichen Verlaufs der Anzahl von Öffnungsvorgängen der Gasaustauschvorrichtung (13) pro vorbestimmtem Zeitintervall auf wenigstens ein vorbestimmtes Kriterium,
bei Erfüllen wenigstens eines vorbestimmten Kriteriums, Auswählen (300f) eines zweiten erstellten stetigen zeitlichen Verlaufs aus der Mehrzahl zweiter erstellter stetiger zeitlicher Verläufe in Abhängigkeit des erfüllten vorbestimmten Kriteriums, Überprüfen (400f) des ausgewählten zweiten erstellten stetigen zeitlichen Verlaufs der Anzahl von Öffnungsvorgängen der Gasaustauschvorrichtung (13) pro vorbestimmtem Zeitintervall auf das Auftreten eines Maximums.

7. Verfahren nach einem der Ansprüche 4 bis 6 mit wenigstens dem vorangehenden Schritt:
Erfassen (050g) einer Garguteigenschaft, vorzugsweise einer Teigart, vorzugsweise durch eine Eingabe eines Benutzers,
wobei die Schritte des Erstellens (250d) eines stetigen zeitlichen Verlaufs, des Überprüfens (400d) des erstellten stetigen zeitlichen Verlaufs wie folgt ausgeführt werden:
Erstellen (250g) eines ersten stetigen zeitlichen Verlaufs aus dem erstellten zeitlichen Verlauf der Anzahl von Öffnungsvorgängen der Gasaustauschvorrichtung (13) pro vorbestimmtem Zeitintervall,
Erstellen (260g) einer Mehrzahl zweiter stetiger zeitlicher Verläufe aus dem erstellten zeitlichen Verlauf der Anzahl von Öffnungsvorgängen der Gasaustauschvorrichtung (13) pro vorbestimmtem Zeitintervall, welche sich hinsichtlich wenigstens eines Parameters ihres Erstellens (260g) unterscheiden,
Überprüfen (280g) des ersten erstellten stetigen zeitlichen Verlaufs der Anzahl von Öffnungsvorgängen der Gasaustauschvorrichtung (13) pro vorbestimmtem Zeitintervall auf wenigstens ein vorbestimmtes Kriterium,
bei Nicht-Erfüllen wenigstens eines vorbestimmten Kriteriums, Beenden (300g) des zweiten erstellten stetigen zeitlichen Verlaufs aus der Mehrzahl zweiter erstellter stetiger zeitlicher Verläufe, dessen Parameter mit dem nicht-erfüllten Kriterium in einem vorbestimmten Zusammenhang steht,
Überprüfen (350g) der Anzahl der zweiten erstellten stetigen zeitlichen Verläufe der Anzahl von Öffnungsvorgängen der Gasaustauschvorrichtung (13) pro vorbestimmtem Zeitintervall, und
bei Reduzierung der Anzahl der zweiten erstellten stetigen zeitlichen Verläufe der Anzahl von Öffnungsvorgängen der Gasaustauschvorrichtung (13) pro vorbestimmtem Zeitintervall auf einen verbliebenen zweiten erstellten stetigen zeitlichen Verlauf der Anzahl von Öffnungsvorgängen der Gasaustauschvorrichtung (13) pro vorbestimmtem Zeitintervall, Überprüfen (400g) des verbliebenen zweiten erstellten stetigen zeitlichen Verlaufs der Anzahl von Öffnungsvorgängen der Gasaustauschvorrichtung (13) pro vorbestimmtem Zeitintervall auf das Auftreten eines Maximums.

8. Verfahren nach einem der Ansprüche 5 bis 7, **dadurch gekennzeichnet, dass** das vorbestimmte Kriterium ist:
die Amplitude des ersten Maximums des ersten stetigen zeitlichen Verlaufs, und/oder
die Amplitude des ersten Maximums der zeitlichen Ableitung des ersten stetigen zeitlichen Verlaufs, und/oder
die Zeitdauer bis zum ersten Anstieg des ersten stetigen zeitlichen Verlaufs, und/oder
die Zeitdauer bis zum ersten Anstieg der zeitlichen Ableitung des ersten stetigen zeitlichen Verlaufs.

9. Verfahren nach einem der Ansprüche 4 bis 8, **dadurch gekennzeichnet, dass** das Erstellen (250d; 250e, 300e; 250f, 260f; 250g, 260g) des stetigen zeitlichen Verlaufs durch zeitliche Verzögerung des erstellten zeitlichen Verlaufs der Anzahl von Öffnungsvorgängen der Gasaustauschvorrichtung (13) pro vorbestimmtem Zeitintervall erfolgt.

10. Verfahren nach Anspruch 9, **dadurch gekennzeichnet, dass** die zeitliche Verzögerung mittels einer dynamischen Funktion berechnet wird, welche auf Differenzialgleichungen basiert.

11. Verfahren nach Anspruch 9 oder 10, **dadurch gekennzeichnet, dass** das Erstellen (250d; 250e, 300e; 250f, 260f; 250g, 260g) des stetigen zeitlichen Verlaufs durch digitale Filterung des erstellten zeitlichen Verlaufs der Anzahl von Öffnungsvorgängen der Gasaustauschvorrichtung (13) pro vorbestimmtem Zeitintervall erfolgt.

12. Verfahren nach einem der Ansprüche 9 bis 11, **dadurch gekennzeichnet, dass** das Erstellen (250d; 250e, 300e; 250f, 260f; 250g, 260g) des stetigen zeitlichen Verlaufs durch Anwendung eines Butterworth-Filters, vorzugsweise dritter Ordnung, auf den erstellten zeitlichen Verlauf der Anzahl von Öffnungsvorgängen der Gasaustauschvorrichtung (13) pro vorbestimmtem Zeitintervall erfolgt.

13. Verfahren nach einem der Ansprüche 9 bis 12, **dadurch gekennzeichnet, dass**
das Erstellen (250d; 250e, 300e; 250f, 260f; 250g, 260g) des stetigen zeitlichen Verlaufs unter Berücksichtigung der Temperatur des Garprozesses erfolgt,
wobei die Temperatur des Garprozesses vorzugsweise über einen Faktor beim Erstellen (250d; 250e, 300e; 250f, 260f; 250g, 260g) des stetigen zeitlichen Verlaufs und/oder über eine temperaturabhängige Parametrierung des Erstellens (250d; 250e, 300e; 250f, 260f; 250g, 260g) des stetigen zeitlichen Verlaufs berücksichtigt wird.

14. Verfahren nach einem der Ansprüche 9 bis 13, **dadurch gekennzeichnet, dass**
das Erstellen (250d; 250e, 300e; 250f, 260f; 250g, 260g) des stetigen zeitlichen Verlaufs unter Berücksichtigung eines Gargrads des Garguts (2) erfolgt, welcher vorzugsweise von einem Benutzer durch Eingabe vorgegeben werden kann,
wobei der Gargrad des Garguts (2) vorzugsweise über einen Faktor beim Erstellen (250d; 250e, 300e; 250f, 260f; 250g, 260g) des stetigen zeitlichen Verlaufs und/oder über eine gargradabhängige Parametrierung des Erstellens (250d; 250e, 300e; 250f, 260f; 250g, 260g) des stetigen zeitlichen Verlaufs berücksichtigt wird.

15. Verfahren nach einem der vorherigen Ansprüche, **dadurch gekennzeichnet, dass**
das Beeinflussen (800) des Garprozesses als ein Beenden (800) des Garprozesses ausgeführt wird.

16. Verfahren nach einem der vorherigen Ansprüche, **gekennzeichnet durch** wenistens den weiteren Schritt:
Benachrichtigen (900) eines Benutzers über das Beeinflussen (800) des Garprozesses.

17. Küchengerät (1), vorzugsweise kombinierter Dampfgarer (1) oder Backofen (1), mit
einen Garraum (11), in welchem ein Gargut (2) gegart, vorzugsweise gebacken, werden kann,
wenigstens eine Gasaustauschöffnung (12), durch welche hindurch Gas zwischen dem Garraum (11) und der Umgebung des Garraums (11), vorzugsweise der Umgebung des Küchengeräts (1), ausgetauscht werden kann,
wenigstens einer Gasaustauschvorrichtung (13), welche ausgebildet ist, die Gasaustauschöffnung (12) durch Öffnungsvorgänge aktiv zu öffnen und/oder zu schließen, und
einer Steuerungseinheit (14), welche ausgebildet ist, die Gasaustauschvorrichtung (13) zu betätigen und/oder die Betätigung der Gasaustauschvorrichtung (13) zu erfassen und/oder den Zustand der Gasaustauschvorrichtung (13) zu erfassen,
wobei die Steuerungseinheit (14) ferner ausgebildet ist, ein Verfahren nach einem der vorherigen Ansprüche auszuführen.

18. Küchengerät (1) nach Anspruch 17, ferner mit
einem Luftfeuchtigkeitssensor (15), welcher ausgebildet und angeordnet ist, die Luftfeuchtigkeit innerhalb des Garraums (11) zu erfassen,
wobei der Luftfeuchtigkeitssensor (15) ferner ausgebildet ist, die erfasste Luftfeuchtigkeit des Garraums (11) der Steuerungseinheit (14) zur Verfügung zu stellen.
